# EUROPEAN PATENT APPLICATION

(11) **EP 2 071 951 A2**
(43) Date of publication of application: **24.06.2009**
(21) Application number: 08172218.3
(22) Date of filing: 18.12.2008
(51) Int. Cl.: A01N 25/04, A01N 33/08, A01N 33/12, A01N 59/00, A01P 1/00

(54) **A biocide**

(30) Priority: 19.12.2007 GB 0724710
(71) Applicant: Envirocair Limited, Harrogate Yorkshire HG1 5PG (GB)
(72) Inventor: Pelham, Robert, Paul, Harrogate, HG1 5PG (GB)
(74) Representative: Smithson, Robert Alan

(57) **Abstract**

A biocide composition wherein the composition is a gel, which gel comprises at least one biocidal agent.

## Description

The present invention relates to a biocide composition, a method of preparing a biocide composition and uses of the same.

Biocides are substances that kill or inhibit the growth of microorganisms such as bacteria, molds, slimes fungi etc. Biocides are known to be provided in liquid form and administered to surfaces to perform their function.

It is also known to use liquid biocide to sterilise air. For example, by exposing a flow of air to a biocide liquid and subsequently filtering the air, the air may be sterilised. This is an important consideration where a body of air is recirculated, for example by an air conditioner or air purifier such as in an office environment.

However, the provision of such biocides cause problems in that the liquid is difficult to handle and liable to spillage. Furthermore, the liquid may have toxicity issues leading to further handling problems and potential health hazards in use.

It is an object of aspects of the present invention to provide a solution to the above or other problems.

According to a first aspect of the present invention there is provided a biocide composition wherein the composition is a gel, which gel comprises at least one biocidal agent.

Advantageously, the provision of at least one biocidal agent contained in a gel allows the biocide composition to be easy to handle and less liable to spillage.

By the term gel it is meant a colloid in which the disperse phase has combined with the continuous phase.

Preferably, the gel comprises at least one gelling agent. Preferably, the at least one gelling agent comprises a polysaccharide. Preferably, the at least one gelling agent comprises carrageenan. Preferably, the at least one gelling agent comprises kappa carrageenan.

Preferably, the at least one gelling agent is present in the gel in an amount between about 0.5% and 10% (by total weight of the gel). More preferably, the at least one gelling agent is present in the gel in an amount between about 1% and 8% (by total weight of the gel). More preferably, the at least one gelling agent is present in the gel in an amount between about 2% and 6% (by weight of the gel). More preferably, the at least one gelling agent is present in the gel in an amount between about 3% and 5% (by total weight of the gel). Most preferably, the at least one gelling agent is present in the gel in an amount of about 4% (by weight of the gel).

Preferably, the gel comprises at least one thickening agent. Preferably, the thickening agent comprises at least one cellulose derivative, which is preferably non-ionic. Preferably, the at least one thickening agent comprises hydroxyethylcellulose.

Preferably, the at least one thickening agent is present in the gel in an amount between about 0.05% and 5% (by total weight of the gel). More preferably, the at least one thickening agent is present in the gel in an amount between about 0.1% and 3% (by total weight of the gel). More preferably, the at least one thickening agent is present in the gel in an amount between about 0.1% and 2% (by total weight of the gel). More preferably, the at least one thickening agent is present in the gel in an amount between about 0.2% and 1% (by total weight of the gel). More preferably, the at least one thickening agent is present in the gel in an amount between about 0.3% and 0.7% (by total weight of the gel). In a most preferred embodiment, the at least one thickening agent is present in the gel in an amount of about 0.5% (by total weight of the gel).

Preferably, the gel comprises at least one alcohol. Preferably, the at least one alcohol is a poly-ol. Preferably, the at least one alcohol comprises 1, 2 or 3 hydroxyl functional groups. Preferably, the at least one alcohol is a diol. In a preferred embodiment, the at least one alcohol comprises at least one C1 to C6 organic moiety being substituted with 1 to 3 hydroxyl functional groups. More preferably, the at least one alcohol comprises at least one C2 to C4 organic moiety being substituted with 2 hydroxyl functional groups. For example, preferably the at least one alcohol comprises propane-1,2-diol.

Preferably, the at least one alcohol is present in the gel in an amount between about 1% and 20% (by total weight of the gel). More preferably, the at least one alcohol is present in the gel in an amount between about 5% and 15% (by total weight of the gel). More preferably, the at least one alcohol is present in the gel in an amount between about 8% and 12% (by total weight of the gel). In a most preferred embodiment, the at least one alcohol is present in the gel in an amount of about 9.5% (by total weight of the gel).

Preferably, the gel comprises water.

Preferably, the gel is formed from at least 65% (by total weight of the gel) of water. More preferably, the gel is formed from between about 75% and 95% (by total weight of the gel) of water. More preferably, the gel is formed from between about 80% and 90% (by total weight of the gel) of water. In a most preferred embodiment, the gel is formed from about 86% (by total weight of the gel) of water.

In a first preferred embodiment, the gel comprises a first biocidal agent.

Preferably, the first biocidal agent comprises at least one emulsifying agent. Preferably, the first biocidal agent comprises at least one non-ionic surfactant. Preferably, the emulsifying agent comprises at least one non-ionic surfactant. Preferably, the at least one emulsifying agent comprises one or more fatty alcohol polyoxyethylene ether. Preferably, the at least one emulsifying agent comprises the polyoxyethylene ether of a mixture of fatty alcohols, which fatty alcohols are preferably C10 to C25 alcohols, more preferably C15 to C20 alcohols. Preferably, the at least one emulsifier comprises the polyoxyethylene ether of a mixture fatty alcohols, wherein the average number of ethylene oxide residues in the polyoxyethylene chain is between about 5 and 50, more preferably, between about 15 and 35, more preferably between about 20 and 30 and most preferably about 25.

Preferably, the at least one emulsifying agent is present in the first biocidal agent in an amount of between about 5 and 25% (by total weight of the first biocidal agent). More preferably, the at least one emulsifying agent is present in the first biocidal agent in an amount of between about 10 and 20% (by total weight of the first biocidal agent). More preferably, the at least one emulsifying agent is present in the first biocidal agent in an amount of between about 12.5 and 17.5% (by total weight of the first biocidal agent). In a most preferred embodiment, the at least one emulsifying agent is present in the first biocidal agent in an amount of about 15% (by total weight of the first biocidal agent).

Preferably, the first biocidal agent comprises a source of ehtylenediaminetetraacetic acid (EDTA). For example, preferably, the first biocidal agent comprises a salt of EDTA, such as the tetrasodium salt thereof.

Preferably, the source of EDTA is present in the first biocidal agent in an amount of between about 5 and 30% (by total weight of the first biocidal agent). More preferably, the source of EDTA is present in the first biocidal agent in an amount of between about 10 and 25% (by total weight of the first biocidal agent). More preferably, the source of EDTA is present in the first biocidal agent in an amount of between about 15 and 20% (by total weight of the first biocidal agent). In a most preferred embodiment, the source of EDTA is present in the first biocidal agent in an amount of about 17.5% (by total weight of the first biocidal agent).

Preferably, the first biocidal agent comprises at least one carbonate. Preferably, the first biocidal agent comprises at least one carbonate salt, which may be, for example, lithium carbonate, sodium carbonate or potassium carbonate.

Preferably, the at least one carbonate is present in the first biocidal agent in an amount between about 5 and 25% (by total weight of the first biocidal agent). More preferably, the at least are of carbonate is present in the first biocidal agent in an amount of between about 10 and 20% (by total weight of the first biocidal agent). More preferably, the at least one carbonate is present in the first biocidal agent in an amount of between about 12.5 and 17.5% (by total weight of the first biocidal agent). In a most preferred embodiment, the at least one carbonate is present in the first biocidal agent in an amount of about 15% (by total weight of the first biocidal agent).

Preferably, the first biocidal agent comprises at least one alcohol. Preferably, the at least one alcohol is optionally substituted, preferably by an amino group. Preferably, the at least one alcohol comprises an optionally substituted C1-C6 alcohol. More preferably, the at least one alcohol comprises an optionally substituted C2 to C4 alcohol. More preferably, the at least one alcohol comprises an optionally substituted C2 alcohol.

Preferably, the at least one alcohol comprises 2-aminoethanol.

Preferably, the at least one alcohol is present in the first biocidal agent in an amount between about 10 and 40% (by total weight of the first biocidal agent). More preferably, the at least one alcohol is present in the first biocidal agent in an amount between about 15 and 35% (by total weight of the first biocidal agent). More preferably, the at least one alcohol is present in the first biocidal agent in an amount between about 20 and 30% (by total weight of the first biocidal agent). More preferably, the at least one alcohol is present in the first biocidal agent in an amount between about 21 and 25% (by total weight of the first biocidal agent). In a most preferred embodiment, the at least one alcohol is present in the first biocidal agent in an amount of about 23.5% (by total weight of the first biocidal agent).

In a second embodiment, the gel may comprise a second biocidal agent.

Preferably, the second biocidal agent comprises at least one oxidising agent. Preferably, the at least on oxidising agent comprises a source of chlorine dioxide.

Preferably, the second biocidal agent comprises at least one quaternary ammonium compound. Preferably, the second biocidal agent comprises at least one halide salt of a quaternary ammonium compound, which is preferably a fluoride, chloride, bromide or iodide salt. Preferably, the second biocidal agent comprises a source of at least one dialkyl dimethyl ammonium moiety, for example, a halide salt thereof. Preferably, the second biocidal agent comprises a source of a didecyl dimethyl ammonium moiety, for example a halide salt thereof, such as didecyl dimethyl chloride.

Preferably, the at least one quaternary ammonium compound is present in the second biocidal agent in an amount between about 1% and 15% (by total weight of the second biocidal agent). More preferably, the at least one quaternary ammonium compound is present in the second biocidal agent in an amount between about 2% and 10% (by total weight of the second biocidal agent). More preferably, the at least one quaternary ammonium compound is present in the second biocidal agent in an amount between about 4% and 8% (by total weight of the second biocidal agent). In a most preferred embodiment, the at least one quaternary ammonium compound is present in the second biocidal agent in an amount of about 6% (by total weight of the second biocidal agent).

Preferably, the second biocidal agent comprises at least one metal salt. Preferably, the at least one metal salt is a salt of any of the following metals: lithium, sodium, potassium, magnesium or calcium. Preferably, the at least one metal salt is a metal halide salt, which metal halide salt may be any of fluoride, chloride, bromide or iodide. In a preferred embodiment, the at least one metal salt comprises potassium chloride.

Preferably, the at least one metal salt is present in the second biocidal agent in an amount between about 0.1 to 10% (by total weight of the second biocidal agent). More preferably, the at least one metal salt is present in the second biocidal agent in an amount between about 0.3 to 5% (by total weight of the second biocidal agent). More preferably, the at least one metal salt is present in the second biocidal agent in an amount between about 0.5 to 2% (by total weight of the second biocidal agent). In a most preferred embodiment, the at least one metal salt is present in the second biocidal agent in an amount of about 1% (by total weight of the second biocidal agent).

Preferably, the second biocidal agent comprises at least one alcohol. Preferably, the at least one alcohol comprises 1, 2 or 3 hydroxyl functional groups. In a preferred embodiment, the at least one alcohol comprises at least one C1 to C6 organic moiety being substituted with 1 to 3 hydroxyl functional groups. More preferably, the at least one alcohol comprises at least one C2 to C4 organic moiety being substituted with a single hydroxyl functional groups. For example, preferably the at least one alcohol comprises isopropanol.

Preferably, the at least one alcohol is present in the second biocidal agent in an amount between about 5% and 20% (by total weight of the second biocidal agent). More preferably, the at least one alcohol is present in the second biocidal agent in an amount between about 10% and 15% (by total weight of the second biocidal agent). In a most preferred embodiment the at least one alcohol is present in the second biocidal agent in an amount of about 12.5% (by total weight of the second biocidal agent).

Preferably, the second biocidal agent comprises at least one surfactant.

Preferably, the at least one surfactant is present in the second biocidal agent in an amount between about 5 and 25% (of the total weight of the second biocidal agent). More preferably, the at least one surfactant is present in the second biocidal agent in an amount between about 10 and 20% (by total weight of the second biocidal agent). More preferably, the at least one surfactant is present in the second biocidal agent in an amount between about 14 and 18% (by total weight of the second biocidal agent). In a most preferred embodiment, the at least one surfactant is present in the second biocidal agent in an amount of about 16% (by total weight of the second biocidal agent).

It will be understood by one skilled in the art that the gel of the present invention may contain the first biocidal agent therein, the second biocidal agent therein, or both biocidal agents therein.

General references hereunder to "the biocidal agent" include references to both the "first biocidal agent" and the "second biocidal agent".

Preferably, the biocidal agent is diluted before addition to the gel. Preferably, the biocidal agent is diluted with water. Preferably, the biocidal agent is diluted to between about 0.5 and 20% by weight with preferably the remainder being water. More preferably, the biocidal agent is diluted to between about 1 and 15% by weight, with preferably the remainder being water. More preferably, the biocidal agent is diluted to between about 2 and 10% by weight, with preferably the remainder being water. More preferably, the biocidal agent is diluted to between about 3 and 7% by weight, with preferably the remainder being water. In a most preferred embodiment, the biocidal agent is diluted to about 5% by weight, with preferably the remainder being water.

Preferably, the biocidal agent is present in the gel in an amount between about 0.5 to 15% by weight of the gel, more preferably between about 1 to 10% by weight of the gel.

The biocide composition may further comprise at least one zeolite. The zeolite may be a natural or synthetic zeolite. Preferably, the zeolite has an average pore size of about 0.1 to 0.5 nanometres (1x10⁻¹⁰m to 5x10⁻¹⁰m) , more preferably, about 0.2 to 0.4 nanometres (2x10⁻¹⁰m to 4x10⁻¹⁰m) . Preferably, the at least one zeolite comprises clinoptilolite.

Preferably, the at least one zeolite is present in granules, preferably having an average size of about 0.1 to 10mm, more preferably about 0.5 to 5mm and most preferably about 1mm.

The at least one zeolite is preferably present in an amount of about 0.5 to 20% by weight of the biocidal composition, more preferably about 1 to 10%, yet more preferably about 3 to 7% and most preferably about 5%.

It is especially preferred that the biocide composition comprises at least one zeolite, such as clinoptilolite, when the biocidal agent comprises at least one quaternary ammonium compound.

In one embodiment, the biocidal agent may be premixed with the at least one zeolite, preferably to thereby impregnate the at least one zeolite with the biocidal agent. The biocidal agent/zeolite mixture may then be added to the gel.

According to a second aspect of the present invention there is provided a biocide composition wherein the composition is a gel, which gel comprises at least one biocidal agent, the biocide composition being produced by the process steps of:
i) preparing a pre-gel mixture;
ii) exposing the pre-gel mixture to a first temperature (T1) for a first time period (P1); then
iii) exposing the pre-gel mixture to a second temperature (T2) for a second time period (P2); while
iv) adding a biocidal agent to the pre-gel mixture; followed by
v) allowing the pre-gel mixture to cool.

According to a third aspect of the present invention there is provided a process of preparing a biocide composition comprising the steps of:
i) preparing a pre-gel mixture;
ii) exposing the pre-gel mixture to a first temperature (T1) for a first time period (P1); then
iii) exposing the pre-gel mixture to a second temperature (T2) for a second time period (P2); while
iv) adding a biocidal agent to the pre-gel mixture; followed by
v) allowing the pre-gel mixture to cool.

Preferably, the pre-gel mixture is allowed to cool to form a gel.

Preferably, the step of preparing a pre-gel mixture further comprises the step of adding at least one gelling agent to at least one emulsifying agent. Preferably, the at least one gelling agent is a powder. Preferably, the at least one emulsifying agent is a powder. Preferably, the at least one gelling agent and the at least one emulsifying agent are blended together, preferably until evenly distributed. Preferably, the at least one gelling agent and the at least one emulsifying agent are blended together for at least about 10 seconds, more preferably at least about 30 seconds, more preferably at least about 1 minute, more preferably at least about 2 minutes and most preferably about 3 minutes.

Preferably, the step of preparing a pre-gel mixture further comprises the step of adding the mixture of the at least one gelling agent and the at least one emulsifying agent to at least one alcohol. Preferably, the mixture of the at least one gelling agent, the at least one emulsifying agent and the at least one alcohol is then stirred. Preferably, the mixture of the at least one gelling agent, the at least one emulsifying agent and the at least one alcohol is then stirred for at least about 10 seconds, more preferably, at least about 30 seconds, more preferably at least about 1 minute, more preferably at least about 3 minutes, more preferably at least about 5 minutes and most preferably about 10 minutes.

Preferably, the step of preparing a pre-gel mixture further comprises the step of adding water to the mixture of the at least one gelling agent, the at least one emulsifying agent and the at least one alcohol. Preferably, the mixture of the at least one gelling agent, the at least one emulsifying agent, the at least one alcohol and water is stirred. Preferably, the mixture of the at least one gelling agent, the at least one emulsifying agent, the at least one alcohol and water is stirred for at least 10 seconds, more preferably at least about 30 seconds, more preferably at least about 1 minute, more preferably at least about 3 minutes and most preferably about 5 minutes.

Preferably, T1 is between about 30°C and 90°C. Preferably, T1 is between about 50°C and 90°C, more preferably, T1 is between about 60°C and 80°C, more preferably, T1 is between about 65°C and 75°C and most preferably, T1 is about 70°C.

Preferably, P1 is between about 30 and 90 minutes, more preferably, P1 is between about 40 and 80 minutes, more preferably, P1 is between about 50 and 70 minutes, more preferably, P1 is between about 55 and 65 and most preferably, P1 is about 60 minutes.

Preferably, T2 is between about 35°C and 95°C. Preferably, T2 is between about 55°C and 95°C, more preferably, T2 is between about 65°C and 85°C, more preferably, T2 is between about 70°C and 80°C and most preferably, T2 is about 75°C.

The references to temperatures herein are temperatures in centigrade.

Preferably, P2 is between about 30 seconds and 20 minutes, more preferably, P2 is between about 1 and 15 minutes, more preferably, P2 is between about 2 and 10 minutes, more preferably, P2 is between about 3 and 7 minutes and most preferably, P2 is about 5 minutes.

Preferably, the step of adding the biocidal agent to the pre-gel mixture also comprises stirring. Preferably, the biocidal agent is stirred into the pre-gel mixture for a period of between about 10 seconds to 10 minutes, more preferably between about 20 seconds and 5 minutes, more preferably between about 30 seconds and 3 minutes and most preferably between about 1 to 2 minutes.

Preferably, the pre-gel mixture and the biocidal agent is poured into moulds before cooling.

As discussed above, in one embodiment, the biocidal agent may be premixed with the at least one zeolite, preferably to thereby impregnate the at least one zeolite with the biocidal agent. The biocidal agent/zeolite mixture may then be added to the gel. Accordingly, in one aspect of the present invention the biocidal agent added to the pre-gel mixture comprises an at least one biocidal agent/at least one zeolite mixture.

The biocidal composition as defined above may be provided on a substrate. The substrate may comprise one or more paper materials or may comprise a textile material, such as a bamboo textile material.

In one embodiment, the substrate may be formed from a material which incorporates a biocidal agent/zeolite mixture as discussed above. For example, a biocidal agent/zeolite mixture may be added to a paper slurry, the paper slurry then dried and the biocidal composition applied to the paper. Several layers of such gel coated substrate may be used in combination to provide a filtering system. Preferably, the substrate is porous, preferably the substrate having the biocidal composition thereon is substantially porous. Such porosity may be as a result of the material's inherent properties or by providing apertures into the substrate.

According to a fourth aspect of the present invention there is provided a filter for an air circulator, the filter comprising a biocide composition wherein the composition is gel, which gel comprises at least one biocidal agent.

Preferably, the air circulator comprises an air purifier or air conditioner.

According to a further aspect of the present invention there is provided a use of a biocide composition wherein the composition is a gel, which gel comprises at least one biocidal agent in an air circulator.

According to a yet further aspect of the present invention there is provided a method of decontaminating an air flow, the method comprising causing the air flow to contact a first biocide composition, wherein the first biocide composition is a gel, which gel comprises at least one first biocidal agent; and causing the air flow to contact a second biocide composition, wherein the second biocide composition is a gel, which gel comprises at least one second biocidal agent.

According to a yet further aspect of the present invention there is provided an air sterilisation device comprising a first and second biocide composition, wherein the first biocide composition is a gel, which gel comprises at least one first biocidal agent; and wherein the second biocide composition is a gel, which gel comprises at least one second biocidal agent.

The first and or second biocidal composition may each independently be provided on a substrate. The substrate may comprise one or more paper materials or may comprise a textile material, such as a bamboo textile material. In one embodiment, said substrate may be formed from a material which incorporates a biocidal agent/zeolite mixture as discussed above. For example, a biocidal agent/zeolite mixture may be added to a paper slurry, the paper slurry then dried and the biocidal composition applied to the paper. Several layers of such gel coated substrate may be used in combination to provide a filtering system.

All of the features contained herein may be combined with any of the above aspects and in any combination.

For a better understanding of the invention, and to show how embodiments of the same may be carried into effect, reference will now be made, by way of example, to experimental data.

### Experiments

### Gel formulation

| Phase | Substance | Amount (w/w) |
|---|---|---|
| Powder | Carageenan | 4% |
| Powder | Hydroxyethylcellulose | 0.5% |
| Liquid | Propane-1,2-diol | 9.5% |
| Liquid | Water | 86% |

The Carageenan and Hydroxyethyl cellulose powders were blended for three minutes until the powders were evenly distributed. This powder blend was then poured into the propane-1,2-diol and stirred for 10 minutes. The mixture was then added to the water and stirred for a further 5 mintes before transferring to a kettle and being heated at a temperature of 70 for 60 minutes followed by a further 5 minutes at 75. To this heated mixture, biocidal agent formulation (1) or (2) was added and stirred for between 1 and 2 minutes (until evenly distributed. The mixture was then immediately transferred to moulds and allowed to cool for 24 hours.

### Biocidal agent (1) formulation

| Substance | Amount (w/w) |
|---|---|
| Didecyldimethylammonium chloride | 29.9% |
| Fattyalcoholpolyglycolether | 14.75% |
| EDTA, Sodium salt | 17.7% |
| Potassium Carbonate | 14.75% |
| 2-Amino ethanol | 23.6% |

### Biocidal agent (2) formulation

| Substance | Amount (w/w) |
|---|---|
| Chlorine Dioxide | 64.5% |
| Didecyldimethylammonium chloride | 6.0% |
| Potassium Chloride | 1.0% |
| Isopropanol | 12.5% |
| Surfactant UN120 | 16.0% |

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A biocide composition wherein the composition is a gel, which gel comprises at least one biocidal agent.

2. A biocide composition according to claim 1, wherein the gel comprises at least one gelling agent.

3. A biocide composition according to claim 2, wherein the at least one gelling agent is present in the gel in an amount between about 0.5% and 10% (by total weight of the gel).

4. A biocide composition according to any preceding claim, wherein the gel comprises at least one thickening agent which at least one thickening agent is present in the gel in an amount between about 0.05% and 5% (by total weight of the gel.)

5. A biocide composition according to any preceding claim, wherein the gel comprises at least one alcohol, which at least one alcohol is present in the gel in an amount between about 1% and 20% (by total weight of the gel.)

6. A biocide composition according to any preceding claim, wherein the gel is formed from at least 65% (by total weight of the gel) of water.

7. A biocide composition according to any preceding claim, wherein the first biocidal agent comprises a source of ehtylenediaminetetraacetic acid (EDTA).

8. A biocide composition according to any preceding claim, wherein the gel may comprise a second biocidal agent which second biocidal agent comprises at least one oxidising agent.

9. A biocide composition according to claim 8, wherein the second biocidal agent comprises at least one quaternary ammonium compound.

10. A biocide composition according to any preceding claim, wherein the biocide composition may further comprise at least one zeolite.

11. A biocide composition wherein the composition is a gel, which gel comprises at least one biocidal agent, the biocide composition being produced by the process steps of:
i) preparing a pre-gel mixture;
ii) exposing the pre-gel mixture to a first temperature (T1) for a first time period (P1); then
iii) exposing the pre-gel mixture to a second temperature (T2) for a second time period (P2); while
iv) adding a biocidal agent to the pre-gel mixture; followed by
v) allowing the pre-gel mixture to cool.

12. A process of preparing a biocide composition comprising the steps of:
i) preparing a pre-gel mixture;
ii) exposing the pre-gel mixture to a first temperature (T1) for a first time period (P1); then
iii) exposing the pre-gel mixture to a second temperature (T2) for a second time period (P2); while
iv) adding a biocidal agent to the pre-gel mixture; followed by
v) allowing the pre-gel mixture to cool.

13. A filter for an air circulator, the filter comprising a biocide composition wherein the composition is gel, which gel comprises at least one biocidal agent.

14. A method of decontaminating an air flow, the method comprising causing the air flow to contact a first biocide composition, wherein the first biocide composition is a gel, which gel comprises at least one first biocidal agent; and causing the air flow to contact a second biocide composition, wherein the second biocide composition is a gel, which gel comprises at least one second biocidal agent.

15. An air sterilisation device comprising a first and second biocide composition, wherein the first biocide composition is a gel, which gel comprises at least one first biocidal agent; and wherein the second biocide composition is a gel, which gel comprises at least one second biocidal agent.
